# DEMANDE DE BREVET EUROPEEN

(11) **EP 0 685 291 A1**
(43) Date de publication de la demande: **06.12.1995**
(21) Numéro de dépôt: 95401224.1
(22) Date de dépôt: 24.05.1995
(51) Int. Cl.: B23K 26/00

(54) **Procédé et dispositif de soudage par faisceau laser d'un élément métallique peu accessible**

(30) Priorité: 30.05.1994 FR 9406552
(71) Demandeur: FRAMATOME, 92084 Courbevoie (FR)
(72) Inventeur: Boudot, Cécile, F-71880 Chatenoy-le-Royal (FR); Vastra-Bobin, Isabelle, F-71200 Le Creusot (FR); Bobin, Vincent, F-71200 Le Creusot (FR); Dugny, Pierre Guy, F-71200 Le Creusot (FR)
(74) Mandataire: Bouget, Lucien

(57) **Abrégé**

Le faisceau laser 18 pénètre dans une zone 11 au voisinage de la zone à souder des éléments métalliques (7, 7'), en traversant une surface d'extrémité (17) de la fibre optique (10) sensiblement plane et inclinée d'un angle a non nul par rapport à un plan perpendiculaire à l'axe de la fibre optique (10). La tête de soudage (8) comporte des moyens (15) de focalisation du faisceau (18) dans la zone à souder mais ne comporte pas de moyen optique de déviation du faisceau tel qu'un miroir. Le dispositif peut être utilisé en particulier pour le soudage de manchons de réparation à l'intérieur de tubes de générateur de vapeur d'un réacteur nucléaire à eau sous pression.

## Description

L'invention concerne un procédé et un dispositif de soudage par faisceau laser d'un élément métallique peu accessible et en particulier d'un élément rapporté tel qu'un manchon à l'intérieur d'un tube.

Les réacteurs nucléaires refroidis par de l'eau et en particulier les réacteurs nucléaires refroidis par de l'eau sous pression comportent des générateurs de vapeur ayant un faisceau de plusieurs milliers de tubes de grande longueur et de faible diamètre, par exemple d'une longueur de l'ordre de 20 mètres et d'un diamètre de l'ordre de 20 mm.

Pendant le fonctionnement du réacteur nucléaire, les tubes à l'intérieur desquels passe l'eau sous pression de refroidissement du réacteur sont suceptibles d'être détériorés par corrosion, en particulier au voisinage de la face supérieure de sortie de la plaque tubulaire dans laquelle sont fixés les tubes du faisceau.

Des contrôles des tubes du faisceau sont effectués périodiquement, lors des arrêts du réacteur nucléaire.

Lorsqu'une fissure ou une amorce de fissure est décelée dans un tube du faisceau d'un générateur de vapeur, on réalise soit le bouchage du tube à ses deux extrémités, soit la réparation du tube, par pose d'un manchon qui est serti et soudé à l'intérieur de la partie du tube détérioré.

Les soudures nécessaires pour assurer l'étanchéité du manchon doivent être effectuées par l'intérieur du tube et du manchon de réparation, en introduisant une tête de soudage dans le tube à partir de la boîte à eau du générateur de vapeur. Le dispositif de soudage doit comporter des moyens de déplacement et de commande à distance de la tête de soudage, de manière à réaliser la soudure du manchon et du tube, suivant au moins une zone circulaire située à l'une des extrémités du manchon qui est introduit dans le tube à réparer. La seconde extrémité du manchon peut être également soudée au tube dans une zone située au voisinage de la face d'entrée de la plaque tubulaire sur laquelle le tube affleure ou dans une zone située légèrement à l'intérieur de la plaque tubulaire.

Les soudures des manchons doivent donc être effectuées dans des zones peu accessibles à l'intérieur des tubes de générateur de vapeur ou à l'intérieur de la plaque tubulaire.

De manière plus générale, dans le domaine de la construction ou de la réparation des équipements nucléaires ou des machines pour la production d'énergie telles que les turbines, il peut être nécessaire d'effectuer des opérations de soudage ou de refusion pour la réparation de soudures, sur des éléments peu accessibles.

Par exemple, la reprise et la réparation de la soudure de la plaque de partition de la boîte à eau d'un générateur de vapeur demandent une intervention à l'intérieur de la boîte à eau, dans une zone peu accessible en-dessous de la plaque tubulaire.

De même, le soudage ou la réparation des aubes de certaines turbines nécessitent des interventions dans des zones d'accès difficile.

Pour réaliser de telles opérations de soudage de pièces peu accessibles, en particulier pour réaliser des opérations de soudage de manchons de réparation à l'intérieur de tubes d'un générateur de vapeur, on a proposé des procédés et dispositifs utilisant un rayonnement laser.

Le rayonnement laser produit par une source de puissance est guidé suivant un parcours optique entre la source de puissance et une zone proche de la surface métallique sur laquelle on effectue le soudage. On a proposé le plus souvent de transporter le rayonnement laser à l'intérieur d'une fibre optique qui comporte une première extrémité d'entrée recevant le rayonnement de la source et une seconde extrémité de sortie située à l'intérieur de la tête de soudage qui est introduite à l'intérieur du tube. Les fibres optiques présentent de très faibles diamètres et peuvent transporter un rayonnement laser d'une source de puissance sur des distances très importantes de l'ordre de plusieurs dizaines ou plusieurs centaines de mètre. L'utilisation d'une fibre optique pour transporter un rayonnement laser entre une source de puissance et une tête de soudage est donc tout-à-fait appropriée dans le cas du soudage d'un élément peu accessible.

Le rayonnement laser transporté par la fibre optique ressort de celle-ci par son extrémité de sortie disposée à l'intérieur de la tête de soudage, à proximité de la zone dans laquelle on réalise le soudage. Le faisceau laser sortant de la fibre est focalisé et dirigé vers la zone de soudage, de manière que le rayonnement laser transporté par la fibre se trouve concentré dans une zone de faible dimension des surfaces à souder. On réalise ainsi une fusion localisée des éléments à souder par déplacement de la tête de soudage et une soudure suivant une trajectoire définie.

Dans la mesure où la fibre optique est généralement disposée à l'intérieur de la tête de soudage dans une direction axiale, le faisceau laser est généralement dirigé suivant cette direction axiale à sa sortie de la fibre.

Dans le cas d'une soudure sur une surface disposée latéralement par rapport à la tête de soudage, par exemple dans le cas du soudage d'un manchon sur la surface latérale d'un tube dans lequel est engagée la tête de soudage, il est nécessaire de renvoyer le faisceau laser ayant initialement une direction axiale en direction de la zone à souder disposée latéralement. Pour cela, on utilise généralement un miroir qui est disposé à proximité de l'extrémité de sortie de la fibre et qui est incliné par rapport à l'axe de la fibre optique et de la tête de soudage, de manière à diriger le faisceau laser sur la zone à souder.

Il est également nécessaire de concentrer le rayonnement sur une zone de faible dimension des pièces à souder et, pour celà, on réalise une focalisation du faisceau par des moyens optiques tels que des lentilles.

On a également proposé d'utiliser des miroirs optiques concaves qui permettent à la fois de focaliser le faisceau et de le diriger vers la surface métallique sur laquelle on réalise le soudage au laser.

Cependant, l'utilisation d'éléments optiques au voisinage de la zone dans laquelle on effectue le soudage au laser peut présenter des inconvénients notables, dans la mesure où les surfaces optiques sont susceptibles de se recouvrir de métal provenant de la zone de soudage dans laquelle le métal des pièces à souder est en fusion ou encore de particules de toute nature arrachées aux pièces à souder par le faisceau laser.

D'autre part, pour réaliser le balayage de la surface métallique lors du traitement, il est nécessaire de déplacer la fibre et les moyens optiques (lentilles et miroirs), par exemple en rotation et en translation à l'intérieur du tube.

Pendant ces déplacements, il est difficile d'obtenir un réglage efficace et précis du faisceau laser par les moyens optiques.

En particulier, il est difficile de régler avec précision le point de focalisation du faisceau laser.

La réalisation d'une tête de soudage par faisceau laser comportant la partie d'extrémité de sortie d'une fibre optique et des moyens optiques de déflection et de focalisation du faisceau laser sortant de la fibre demande les plus grands soins pour obtenir des conditions de soudage reproductibles pendant le déplacement de la tête de soudage, par exemple à l'intérieur d'un tube.

En outre, les moyens optiques de la tête de soudage par faisceau laser peuvent être exposés à des vapeurs métalliques ou à des salissures dans la zone de soudage et peuvent être détruits par le rayonnement de puissance provenant de la source laser à travers la fibre optique.

Le but de l'invention est donc de proposer un procédé de soudage par faisceau laser d'éléments métalliques peu accessibles consistant à faire passer le faisceau laser d'une source de rayonnement laser de puissance à une zone proche de la zone de soudage des éléments métalliques, à l'intérieur d'une fibre optique et à diriger et à focaliser le faisceau laser sur un point de la zone de soudage, ce procédé permettant d'éviter l'utilisation de moyens optiques pour diriger le faisceau vers un point de la zone de soudage.

Dans ce but, on fait passer le faisceau laser à travers une surface d'extrémité plane de la fibre optique inclinée d'un angle a non nul par rapport à un plan perpendiculaire à l'axe de la fibre optique, à proximité de la zone de soudage et on réalise une focalisation du faisceau laser ayant traversé la surface d'extrémité inclinée de la fibre optique, en un point de la zone de soudage.

L'invention est également relative à un dispositif de soudage par faisceau laser d'éléments peu accessibles comportant une source de rayonnement laser, une fibre optique ayant une extrémité d'entrée disposée pour recevoir un rayonnement provenant de la source et une extrémité de sortie du rayonnement laser disposée à l'intérieur d'une tête de soudage comportant des moyens de focalisation, caractérisé par le fait que l'extrémité de sortie de la fibre optique comporte une surface de sortie sensiblement plane faisant un angle α non nul avec un plan transversal perpendiculaire à l'axe de la fibre optique et qu'un moyen de focalisation optique est disposé à l'intérieur de la tête de soudage sur le trajet optique du faisceau laser, après sa traversée de la surface d'extrémité inclinée de la fibre optique.

Afin de bien faire comprendre l'invention, on va maintenant décrire, à titre non limitatif, en se référant aux figures jointes en annexe, un exemple de mise en oeuvre du procédé suivant l'invention et un dispositif pour la mise en oeuvre de ce procédé constitué par une tête de soudage au laser à l'intérieur d'un tube de faible diamètre.

La figure 1 est une vue en coupe partielle d'une fibre optique utilisée dans la mise en oeuvre du procédé suivant l'invention.

La figure 2 est une vue en coupe axiale d'une tête de soudage au laser d'un dispositif suivant l'invention.

La figure 3 est une vue schématique d'un dispositif de soudage au laser suivant l'invention ayant une tête rotative.

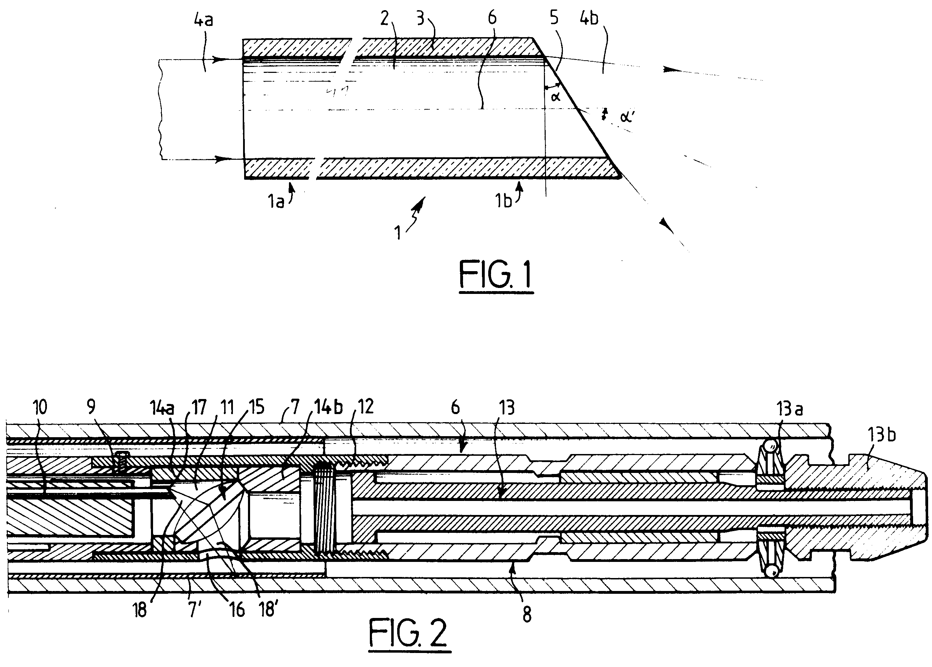

Sur la figure 1, on a représenté de manière très schématique la partie d'entrée 1a et la partie de sortie 1b d'une fibre optique 1 permettant de mettre en oeuvre le procédé suivant l'invention.

La fibre optique 1 comporte de manière habituelle un corps 2 en un matériau optique tel que la silice pure et une gaine 3. La fibre optique 1 peut présenter par exemple un diamètre de l'ordre de 1 mm.

L'extrémité d'entrée 1a de la fibre optique est reliée à une source de rayonnement laser de puissance, de manière à recevoir un faisceau laser 4a qui peut présenter une légère divergence, suivant l'ouverture numérique de la fibre utilisée.

Généralement, l'angle maximal d'entrée du faisceau dans la fibre est de l'ordre de 25°.

Le faisceau 4a est guidé par la gaine 3, suivant toute la longueur de la fibre, pour ressortir à l'extrémité de sortie de la partie 1b de la fibre sous la forme d'un faisceau 4b.

Pour la mise en oeuvre du procédé suivant l'invention, on utilise une fibre optique dont la surface d'extrémité de sortie 5, sensiblement plane, est inclinée d'un angle α par rapport à un plan transversal perpendiculaire à l'axe longitudinal 6 de la fibre.

La surface d'extrémité 5 de la fibre est parfaitement polie de sorte que le dioptre plan traversé par le faisceau 4b à l'extrémité de sortie de la fibre présente une très bonne qualité optique.

De telles fibres comportant une surface d'extrémité inclinée ont été utilisées récemment, de manière très limitée, dans le domaine médical. Cependant, de telles fibres optiques à extrémité inclinée n'ont jamais été utilisées pour le transport d'un rayonnement laser de puissance.

Lorsqu'on utilise une fibre telle que la fibre 1 ayant une extrémité de sortie 5 inclinée, on observe une inclinaison du faisceau de sortie 4b d'un angle α' par rapport à l'axe 6 de la fibre optique ainsi qu'un accroissement de la divergence du faisceau à la sortie de la fibre optique.

L'inclinaison du faisceau dans un sens inverse de l'inclinaison de la surface d'extrémité 5 est obtenue du fait de la différence d'indice entre le coeur 2 de la fibre et le milieu ambiant dans lequel sort le faisceau 4b, combinée à l'inclinaison de la surface de sortie 5.

L'angle d'inclinaison α' du faisceau dépend de l'angle d'inclinaison α de la surface d'extrémité de la fibre et cet angle d'inclinaison augmente avec l'angle d'inclinaison de la surface d'extrémité de la fibre.

Cependant, de manière à limiter les pertes de rayonnement laser dans la fibre par renvoi d'une partie du rayonnement vers la source et pour éviter l'apparition de points chauds dans certaines zones de la fibre, il est nécessaire de limiter l'angle α à une valeur généralement comprise entre 30 et 36°, l'angle d'inclinaison de la fibre pouvant être de manière avantageuse voisin de 33°.

Dans le cas d'un faisceau ayant un angle de divergence initiale de 25° et d'une surface d'extrémité de la fibre inclinée d'un angle de 33°, l'angle d'inclinaison α' du faisceau 4b en sortie est voisin de 22°. L'angle de divergence du faisceau 4b à la sortie de la fibre est de 43°.

Malgré l'inclinaison limitée et l'augmentation de la divergence du faisceau à la sortie de la fibre, il est possible d'utiliser une fibre telle que la fibre 1 pour réaliser une tête de soudage au laser à l'intérieur d'un tube, ne comportant aucun moyen optique de renvoi du faisceau laser tel qu'un miroir.

Sur la figure 2, on a représenté une tête de soudage par faisceau laser désignée de manière générale par le repère 8 et comportant une fibre optique 10 ayant une surface d'extrémité inclinée disposée de manière à pouvoir mettre en oeuvre le procédé de soudage suivant l'invention à l'intérieur d'un tube 7.

Le tube 7 est par exemple un tube métallique d'un générateur de vapeur dans lequel on réalise le soudage d'un manchon de réparation 7' en utilisant la tête de soudage par faisceau laser 8.

La tête de soudage par faisceau laser est fixée à une première extrémité d'une canne de soudage 9 à l'intérieur de laquelle la fibre 10 est disposée dans une direction sensiblement axiale.

La seconde extrémité de la canne de soudage 9 non représentée sur la figure 2 est reliée à un élément allongé réalisé sous la forme d'un conduit dans lequel la fibre est fixée dans une disposition sensiblement axiale.

La fibre 10 comporte une extrémité venant en saillie à l'intérieur d'une chambre 11 à l'intérieur d'une chemise tubulaire 12 fixée par vissage à l'extrémité de la canne de soudage 9.

La partie d'extrémité de la canne de soudage 9 opposée à la partie reliée à la tête 8 représentée sur la figure 2, est elle-même reliée à un élément allongé réalisé sous la forme d'un conduit souple dans lequel la fibre est fixée dans une disposition sensiblement axiale. L'élément allongé permet d'assurer le passage et la protection de la fibre dont l'extrémité opposée à l'extrémité pénétrant dans la chambre 11 est reliée à une source de rayonnement laser permettant l'alimentation de la fibre.

La partie d'extrémité 13 de la tête de soudage 8 fixée à la seconde extrémité de la chemise 12 opposée à la première extrémité reliée à la canne de soudage 9 comporte en particulier des moyens de guidage 13a de la tête de soudage par faisceau laser 8 à l'intérieur du tube 7 qui peuvent être constitués par exemple par un centreur à billes dans une disposition radiale fixé sur la tête 8 et venant en contact avec la surface intérieure du tube pour assurer le maintien radial et le guidage de la tête de travail 8.

Les moyens de guidage 13a sont serrés contre la partie 13 de la tête de soudage par un embout d'extrémité 13b présentant une forme conique et permettant de faciliter l'introduction de la tête de soudage par faisceau laser dans un tube.

A l'intérieur de la chemise 12 sont fixés deux éléments de support 14a et 14b d'un ensemble de lentilles de focalisation 15.

La canne de soudage 9 permet d'assurer le passage et la protection de la fibre optique 10 dont l'extrémité opposée à l'extrémité pénétrant dans la chambre 11 est reliée à une source de rayonnement laser permettant l'alimentation de la fibre.

L'extrémité de la fibre optique en saillie à l'intérieur de la chambre 11 délimitée par le chemise 12 comporte une surface d'extrémité 17 plane, polie et inclinée d'un angle α par rapport à l'axe longitudinal de la fibre 10.

La paroi de la chemise 12 est traversée par une ouverture 16.

Pour mettre en fonctionnement la tête de soudage par faisceau laser 8 à l'intérieur du tube 7 et du manchon 7', on alimente l'extrémité d'entrée de la fibre 10 en un faisceau laser de puissance qui est guidé par la fibre suivant toute sa longueur et qui pénètre dans la chambre 11 sous la forme d'un faisceau 18 dévié d'un angle α' par rapport à l'axe de la fibre optique 10 parallèle à l'axe de la tête de travail 8 et placée dans une disposition décalée radialement par rapport à cet axe.

De cette manière, le faisceau 18 est dirigé vers la paroi intérieure du tube 7, et du manchon de réparation 7', à travers l'ensemble de lentilles de focalisation 15, sans qu'on ait à utiliser de miroir de renvoi du faisceau laser 18.

L'ouverture 16 traversant la paroi de la chemise 12 est disposée par rapport à l'extrémité 17 de la fibre optique 10 et par rapport à l'ensemble de lentilles de focalisation 15, de manière à permettre le passage du faisceau convergent 18' obtenu par focalisation du faisceau 18, à la sortie de l'ensemble de lentilles de focalisation 15. L'ouverture 16 présente un diamètre assurant le passage de la totalité du faisceau convergent 18' qui est focalisé et dirigé par l'ensemble de lentilles de focalisation 15, de manière que le point de focalisation du faisceau se trouve au voisinage de la surface intérieure du tube 7, dans une zone située vers l'extrémité du manchon de réparation 7'.

Le faisceau 18' est incident sur la paroi du manchon de réparation 7' et sur la surface intérieure du tube 7, suivant une tache focale de faible dimension, de manière que le faisceau laser transmette son énergie au manchon 7' et à la paroi intérieure du tube 7 et assure la fusion simultanée d'une partie de la paroi du manchon de réparation 7' et de la paroi du tube 7.

On réalise un balayage de la zone à souder constituée par la zone de contact entre le manchon de réparation 7' et la paroi intérieure du tube 7, en faisant tourner la canne 9 et la tête de soudage 8 autour de leur axe commun à l'intérieur du tube, la canne de soudage 9 étant maintenue en position centrée par les moyens de guidage 13a.

Des moyens non représentés permettent la mise en circulation d'un gaz, par exemple un gaz inerte, dans la zone de soudage du faisceau laser 18'. On évite ainsi la projection de gouttes de métal fondu ou de particules sur l'ensemble de lentilles 15 et on réalise l'entraînement des fumées produites dans la zone où s'effectue le soudage.

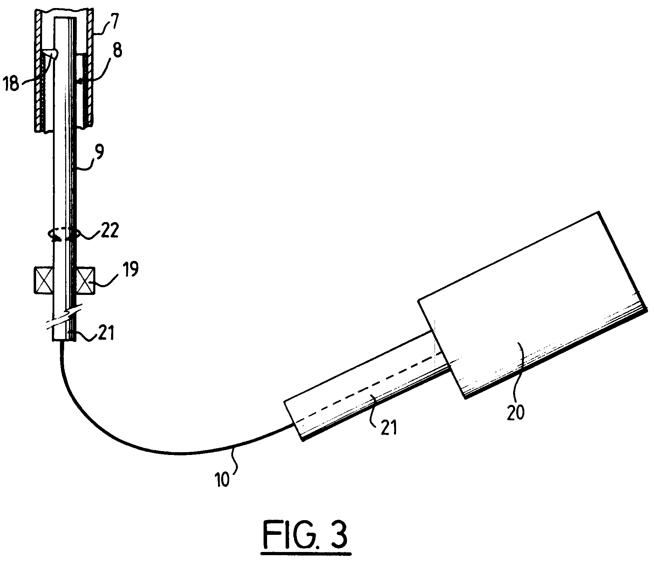

Sur la figure 3, on a représenté de manière schématique le montage de la canne 9 et de la tête de soudage 8 permettant de mettre en rotation la tête de soudage 8 à l'intérieur du tube 7.

La canne 9 est engagée à l'intérieur d'un module de mise en rotation 19 comportant des moyens moteurs de mise en rotation et des paliers de guidage de la canne 9.

L'extrémité de la canne 9 opposée à la tête de soudage 8 est reliée à un conduit 21 à l'intérieur duquel est fixée, suivant toute la longueur du conduit, la fibre optique 10 dont l'extrémité d'entrée opposée à la tête 8 est reliée à une source de rayonnement laser 20.

Comme indiqué par la double flèche courbe 22, la canne 9 et la tête de soudage 8 peuvent être entraînées en rotation dans un sens et dans l'autre par le module de mise en rotation 19.

Afin de limiter la torsion de la fibre lors du soudage, on réalise le soudage en faisant effectuer à la canne 9 et à la tête de soudage 8, deux ou trois tours de rotation à l'intérieur du tube, après avoir placé la tête 8 en position de soudage du manchon et alimenté la fibre optique en rayonnement laser par excitation de la source 20.

Après avoir effectué deux ou trois tours dans un sens, on effectue le même nombre de tours dans l'autre sens, soit en maintenant l'alimentation de la fibre optique soit en coupant l'alimentation fournie par la source 20. On limite ainsi la torsion de la fibre optique 10 qui, compte tenu du fait qu'elle présente une longueur relativement importante (plusieurs dizaines de mètre), est susceptible de supporter une torsion de deux ou trois tours.

L'invention permet donc de réaliser le soudage d'éléments peu accessibles, par exemple d'un manchon à l'intérieur d'un tube de faible diamètre, par un faisceau laser focalisé, sans utiliser de moyen optique de déviation ou de renvoi du faisceau.

L'invention ne se limite pas aux modes de réalisation qui ont été décrits.

C'est ainsi qu'on peut imaginer d'utiliser des fibres optiques ayant des caractéristiques différentes de celles qui ont été indiquées dans la description et un dispositif de soudage comportant une tête ayant une structure différente de celle qui a été décrite et qui est adaptée au soudage d'un manchon à l'intérieur d'un tube. Dans le cas de soudage d'un élément différent d'un manchon à l'intérieur d'un tube, par exemple dans le cas du soudage ou de la reprise de soudage d'ailettes de turbine, on peut utiliser une tête de soudage présentant une forme adaptée différente de la forme tubulaire de la tête de soudage décrite plus haut.

Enfin, le procédé et le dispositif suivant l'invention peuvent être utilisés pour réaliser le soudage par faisceau laser d'éléments peu accessibles différents de ceux qui ont été décrits, dans un domaine différent de la construction ou de la réparation de composants pour l'industrie nucléaire.

## Revendications

**1.-** Procédé de soudage par faisceau laser d'éléments métalliques (7, 7') peu accessibles consistant à faire passer le faisceau laser d'une source de rayonnement laser de puissance (20) à une zone (11) proche de la zone de soudage des éléments (7, 7'), à l'intérieur d'une fibre optique (10) et à diriger et à focaliser le faisceau laser (18) dans la zone de soudage, caractérisé par le fait qu'on fait passer le faisceau laser (18) à travers une surface d'extrémité plane (17) de la fibre optique (10) inclinée d'un angle a non nul par rapport à un plan perpendiculaire à l'axe de la fibre optique (10), à proximité de la zone de soudage et qu'on réalise une focalisation du faisceau laser ayant traversé la surface d'extrémité (17) de la fibre optique (10), en un point de la zone de soudage.

**2.-** Procédé suivant la revendication 1, caractérisé par le fait que l'angle d'inclinaison α de la surface d'extrémité (17) de la fibre optique (10) est compris entre 30 et 36°.

**3.-** Procédé suivant la revendication 2, caractérisé par le fait que l'angle d'inclinaison α de la surface d'extrémité (17) de la fibre optique (10) est voisin de 33°.

**4.-** Procédé suivant l'une quelconque des revendications 1 à 3, caractérisé par le fait que les éléments métalliques à souder (7, 7') sont constitués par un tube (7) et un manchon de réparation (7') introduit et serti à l'intérieur du tube (7).

**5.-** Procédé suivant la revendication 4, caractérisé par le fait qu'on fait tourner la fibre optique (10) et le faisceau laser (18) autour d'un axe commun au tube (7) et au manchon (7') pour réaliser le soudage.

**6.-** Procédé suivant l'une quelconque des revendications 1 à 5, caractérisé par le fait qu'on met un gaz en circulation dans une zone de soudage du faisceau laser (18').

**7.-** Dispositif de soudage par faisceau laser d'éléments peu accessibles (7, 7') comportant une source de rayonnement laser (20), une fibre optique (10) ayant une extrémité d'entrée disposée pour recevoir un rayonnement provenant de la source (20) et une extrémité de sortie (17) du rayonnement laser disposée à l'intérieur d'une tête de soudage (8) comportant des moyens de focalisation (15), caractérisé par le fait que l'extrémité de sortie de la fibre optique (10) comporte une surface de sortie sensiblement plane faisant un angle a non nul avec un plan transversal perpendiculaire à l'axe de la fibre optique et qu'un moyen de focalisation optique (15) est disposé à l'intérieur de la tête de soudage (8), sur le trajet optique du faisceau laser (18) après sa traversée de la surface d'extrémité inclinée (17) de la fibre optique (10).

**8.-** Dispositif suivant la revendication 7, caractérisé par le fait que le moyen de focalisation (15) est constitué par un ensemble de lentilles.

**9.-** Dispositif suivant l'une quelconque des revendications 7 et 8, caractérisé par le fait que la tête de soudage (8) est fixée à l'extrémité d'une canne (9) montée rotative autour de son axe dans un module de rotation (19) comportant des moyens moteurs de mise en rotation de la canne (9) et de la tête de soudage (8) autour de leur axe commun.

**10.-** Dispositif suivant l'une quelconque des revendications 7, 8 et 9, pour effectuer le soudage d'un élément métallique (7') à l'intérieur d'un tube (7), caractérisé par le fait que la tête de soudage par faisceau laser (8) comporte une chambre (11) délimitée par une chemise tubulaire (12) dans laquelle débouche l'extrémité de sortie (17) de la fibre optique (10), dont le diamètre est inférieur au diamètre intérieur du tube (7) et dont la paroi est percée d'une ouverture (16) de passage du faisceau laser (18') obtenu par focalisation du faisceau (18) sortant de la fibre optique (10), par le moyen de focalisation (15).

**11.-** Dispositif suivant la revendication 10, caractérisé par le fait que la fibre (10) est placée, à l'intérieur de la tête de soudage (8), dans une position décalée radialement, par rapport à l'axe de la tête de soudage (8).
